# EUROPEAN PATENT APPLICATION

(11) **EP 2 594 361 A2**
(43) Date of publication of application: **22.05.2013**
(21) Application number: 12193274.3
(22) Date of filing: 19.11.2012
(51) Int. Cl.: B23Q 11/00, B24B 23/00, B24B 55/10, B25F 5/00

(54) **Dust collection accessory for a power tool**

(30) Priority: 17.11.2011 US 201161560998 P; 16.11.2012 US 201213678907
(71) Applicant: Black & Decker Inc., Newark, Delaware 19711 (US)
(72) Inventor: Ceroll, Warren, Owings Mills, MD Maryland 21117 (US); Covell, Kevin W., Parkton, MD Maryland 21120 (US); Ng, Francis C., Baltimore, MD Maryland 21239 (US)
(74) Representative: Clayton-Hathway, Anthony Nicholas

(57) **Abstract**

An oscillating power tool system comprises an oscillating power tool comprising a housing, a motor, a first mounting structure, and an output member, for example a cutting accessory, a grinding accessory, a sanding accessory. The motor is disposed in the housing and is configured to drive the output member. The power tool system includes a dust collection accessory comprising a clamp for coupling to the housing of the power tool, and a dust collection apparatus coupled to the clamp for receiving dust generated by the power tool.

## Description

The present invention relates to power tools and more specifically to a dust collection accessory for an oscillating power tool.

Power hand tools are provided in many examples for performing a wide range of tasks. For example, some power hand tools can include an output member that is driven by a motor and that couples with an accessory to perform a working operation onto a work piece. For example, some power hand tools can provide various configurations for attaching cutting accessories, grinding accessories, sanding accessories, and the like. Some power hand tools are configured as oscillating tools that are operable to transmit an oscillating motion onto the accessory.

During the course of performing a working operation, a user may want to collect dust generated by the cutting, grinding or sanding accessory.

A dust collection accessory for a power tool, provided in accordance with a first aspect of the present invention comprises a clamp for coupling to a body or housing of the power tool and a dust collection apparatus coupled to the clamp for receiving dust generated by the power tool.

According to additional features, the dust collection apparatus can include a first end configured to receive the dust and a second end configured to connect to a vacuum system.

According to additional features, the clamp can include a strap for coupling to the body.

According to additional features, the strap can be adjustable to allow the clamp to be coupled to the body at various locations of the body.

According to additional features, the dust collection apparatus can include a tube having a collection opening configured to extend proximate to a dust generating portion of the power tool.

According to additional features, the dust collection apparatus can include a pan having a wedge shape, a wider part of the wedge configured to extend proximate to a dust generating portion of the power tool.

An oscillating power tool system constructed in accordance with a second aspect of the present invention comprises an oscillating power tool comprising a housing, a motor, a first mounting structure, and an output member, for example a cutting accessory, a grinding accessory, a sanding accessory. The motor is disposed in the housing and is configured to drive the output member. The power tool system includes a dust collection accessory comprising a clamp for coupling to the housing of the power tool, and a dust collection apparatus coupled to the clamp for receiving dust generated by the power tool.

An oscillating power tool system in accordance with a third aspect of the present invention comprises an oscillating power tool comprising a housing and a clamp assembly for coupling a tool accessory to the housing, a dust collection accessory comprising a clamp for coupling to the tool accessory and a dust collection apparatus coupled to the clamp for receiving dust generated by the tool accessory.

Further areas of applicability will become apparent from the description provided herein. The description and specific examples in this summary are intended for purposes of illustration.
Figure 1 is a perspective view of a first embodiment of an oscillating power tool and an accessory.
Figure 2 is a perspective view of a second embodiment of an oscillating power tool and an accessory.
Figure 3 is another perspective view of the embodiment of Figure 2.
Figure 4 is a perspective view of a third embodiment of an oscillating power tool and an accessory.

It is desirable to add a dust collector to an oscillating power tool that can be coupled to a vacuum hose to remove dust, e.g., when cutting with a saw blade or when using a sanding accessory coupled to the oscillating tool.

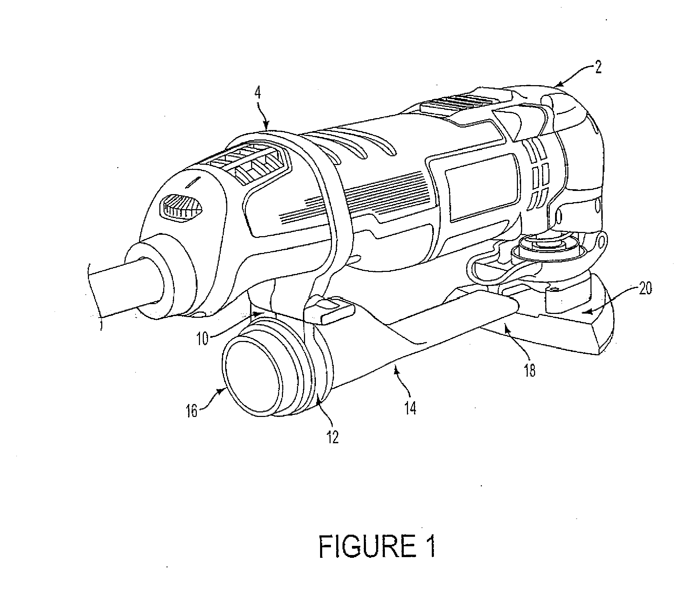

Referring to Figure 1, a first embodiment of the invention is illustrated. Figure 1 illustrates a power hand tool 2, for example an oscillating hand tool. The tool 2 may have an accessory 20, for example a sanding accessory (shown in Figure 1), a cutting accessory, a grinding accessory, etc. coupled to the tool. The accessory 20 will generally generate dust as a result of the work. As such, it is desirable to include a dust collection accessory with the tool 2.

A dust collection accessory preferably includes a clamp 10 for coupling to a body of the tool 2. The clamp 10 preferably includes a strap or band 4 for coupling to a body/housing of the tool 2. The strap 4 is preferably configured to be adjustable such that the accessory can be coupled to the tool body at various locations along a length of the tool 2 and also at various radial positions about the body. The clamp 10 preferably also includes a collar 12. The dust collection accessory also preferably includes a dust collection apparatus 14 for receiving dust generated by the power tool accessory 20. As illustrated in Figure 1, the dust collection apparatus 14 may have a generally tubular shape. A first end 18 of the dust collection apparatus 14 may have a narrowed end with a generally rectangular collection opening that is smaller than the generally tubular shape of the apparatus. The first end 18 of the dust collection apparatus is generally configured to extend proximate to a dust generating portion of the power tool, generally to a position adjacent to the power tool accessory 20. A second end 16 of the dust collection apparatus 14 may have a generally circular opening. The circular opening is sized and configured to be received in and extend through the collar 12 from a side of the collar closest to the tool accessory 20. A portion of the rear end 16 that extends beyond the collar 12 is sized and configured for coupling to a vacuum system (not shown).

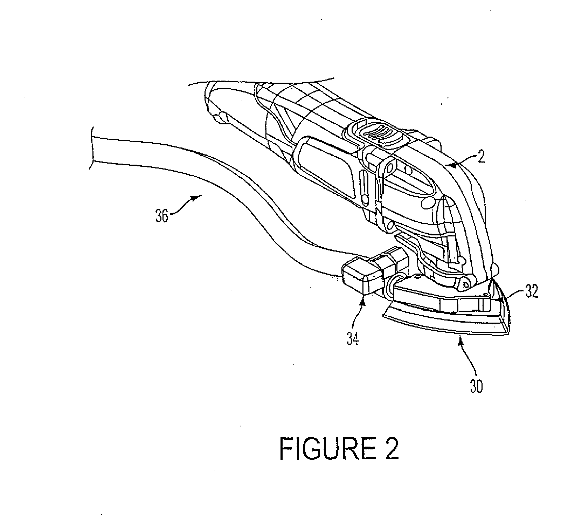

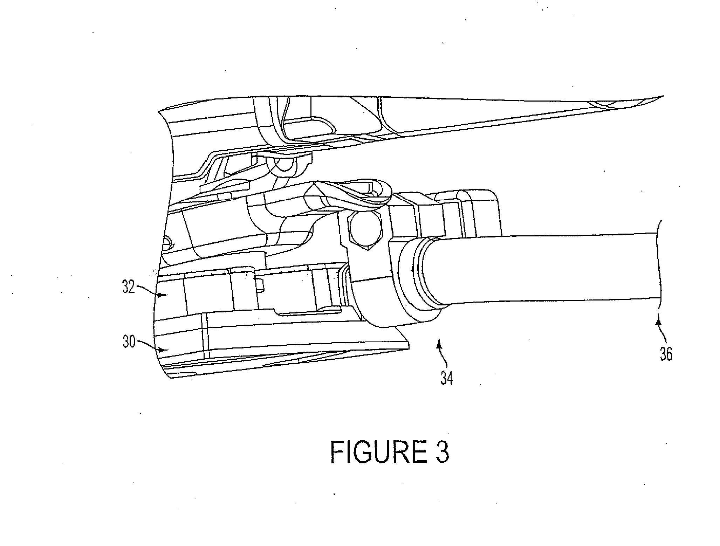

Referring to Figures 2 and 3, a second embodiment of the invention is illustrated. Figures 2 and 3 illustrate a dust collection accessory that is integrated with a tool accessory 30, for example a sanding accessory including a platen 32 that can be attached to the oscillating tool 2. The dust collection accessory includes a dust port 34 that is coupled to a rear side of the platen 32. The port 34 includes a dust collection apparatus such a tube adjacent to the tool accessory 30 for receiving the dust generated by the tool accessory. A distal side of the dust port 34 includes an opening for receiving a vacuum hose 36. The hose 36 is coupled to vacuum system (not shown).

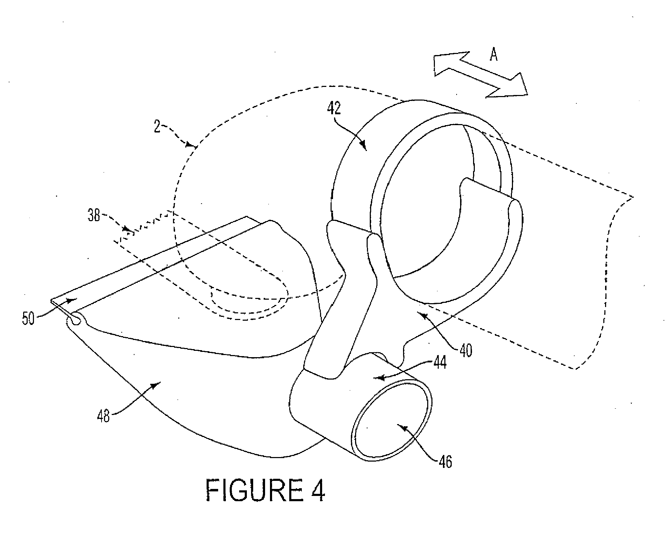

Referring to Figure 4, a third embodiment of the invention is illustrated. Figure 4 illustrates a power hand tool 2 (in phantom), for example an oscillating hand tool. The tool 2 may have an accessory 38, for example a saw blade accessory coupled to the tool. The accessory 38 will generally generate dust as a result of the work. As such, it is desirable to include a dust collection accessory with the tool 2.

A dust collection accessory preferably includes a clamp 40 for coupling to a body of the tool 2. The clamp 40 preferably includes a strap or band 42 for coupling to a body/housing of the tool 2. The strap 42 is preferably configured to be adjustable such that the accessory can be coupled to the tool body at various locations along a length of the tool 2 - adjustable in the directions of arrows A - and also at various radial positions about the body. The clamp 40 preferably also includes a collar 44. The dust collection accessory also preferably includes a dust collection apparatus 48 for receiving dust generated by the power tool accessory 38. As illustrated in Figure 4, the dust collection apparatus 48 may have a generally wedge shape similar to a dust pan. A first end of the dust collection apparatus 48 may have a wide and flat end with an edge 50 extending along the width of the apparatus 48. The edge 50 may be made of a rubber like material to facilitate forming a seal against a surface being cut or any other surface to assist in guiding dust into the dust collection apparatus 48. A second end of the dust collection apparatus 48 may have a generally circular opening. The circular opening is sized and configured to be received in the collar 12 from a side of the collar closest to the tool accessory 38. The collar may also be configured to receive a hose from a vacuum system (not shown). In an alternate embodiment, the second end of the dust collection apparatus 48 may extend through the collar 44 and the hose may couple to the portion of the second end that extends through the collar 44.

Numerous modifications may be made to the exemplary implementations described above.

## Claims

1. A dust collection accessory for a power tool, comprising:
a clamp for coupling to a housing of the power tool; and
a dust collection apparatus coupled to the clamp for receiving dust generated by the power tool.

2. The dust collection accessory recited in claim 1, wherein the dust collection apparatus has a first end configured to receive the dust and a second end configured to connect to a vacuum system.

3. The dust collection accessory recited in claim 1 or claim 2, wherein the clamp comprises a strap for coupling to the housing of the power tool.

4. The dust collection accessory of claim 3, wherein the strap is adjustable to allow the clamp to be coupled to the body at various locations of the body.

5. The dust collection accessory of any preceding claim, wherein the dust collection apparatus comprises a tube having a collection opening configured to extend proximate to a dust generating portion of the power tool.

6. The dust collection accessory of any preceding claim, wherein the dust collection apparatus comprises a pan having a wedge shape, a wider part of the wedge configured to extend proximate to a dust generating portion of the power tool.

7. An oscillating power tool system, comprising:
an oscillating power tool comprising a housing and a clamp assembly for coupling a tool accessory to the housing; and
a dust collection accessory according to any preceding claim.

8. The oscillating power tool system recited in claim 7, wherein the dust collection apparatus has a first end configured to receive the dust and a second end configured to connect to a vacuum system.

9. The oscillating power tool system recited in claim 7 or claim 8, wherein the clamp comprises a strap for coupling to the housing.

10. The oscillating power tool system of claim 9, wherein the strap is adjustable to allow the clamp to be coupled to the housing at various locations on the housing.

11. The oscillating power tool system of any one of claims 7 to 10, wherein the dust collection apparatus comprises a tube having a collection opening configured to extend proximate to a dust generating portion of the power tool.

12. The oscillating power tool system of any one of claims 7 to 11, wherein the dust collection apparatus comprises a pan having a wedge shape, a wider part of the wedge configured to extend proximate to a dust generating portion of the power tool.

13. An oscillating power tool system, comprising:
an oscillating power tool comprising a housing and a clamp assembly for coupling a tool accessory to the housing;
a dust collection accessory comprising a port for coupling to the tool accessory and a dust collection apparatus coupled to the port for receiving dust generated by the tool accessory.

14. The dust collection accessory recited in claim 13, wherein the dust collection apparatus has a first end configured to receive the dust and a second end configured to connect to a vacuum system.
